# EUROPEAN PATENT APPLICATION

(11) **EP 2 412 745 A1**
(43) Date of publication of application: **01.02.2012**
(21) Application number: 11175476.8
(22) Date of filing: 27.07.2011
(51) Int. Cl.: C08G 77/12, C08G 77/26, C08G 77/388, C08G 77/54, C08L 83/04

(54) **Composition for thermoplastic silicone resin**

(30) Priority: 27.07.2010 JP 2010168311
(71) Applicant: Nitto Denko Corporation, Ibaraki-shi, Osaka 567-8680 (JP)
(72) Inventor: Fujii, Haruka, Ibaraki-shi, Osaka 567-8680 (JP); Katayama, Hiroyuki, Ibaraki-shi, Osaka 567-8680 (JP)
(74) Representative: Grünecker, Kinkeldey, Stockmair & Schwanhäusser

(57) **Abstract**

The present invention relates to a composition for a thermoplastic silicone resin, the composition including: at least one imide compound selected from the group consisting of compounds represented by formula. (I) in which X represents a hydrogen atom or a monovalent hydrocarbon group and compounds represented by formula (II) in which Y represents a divalent hydrocarbon group; an organohydrogensiloxane; and a hydrosilylation catalyst.

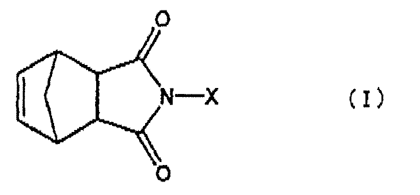

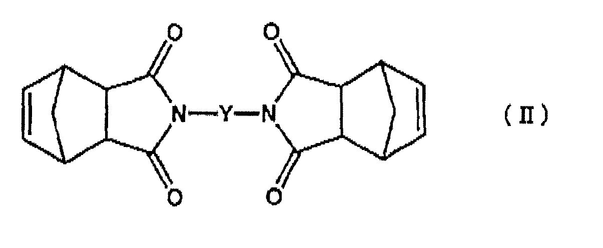

## Description

### FIELD OF THE INVENTION

The present invention relates to a composition for a thermoplastic silicone resin. More particularly, the invention relates to a composition for a thermoplastic silicone resin, which can provide a thermoplastic resin composition capable of encapsulating optical semiconductor elements, and relates to a resin composition obtained by reacting the composition.

### BACKGROUND OF THE INVENTION

Silicone resins are excellent in transparency, heat resistance, light resistance, and flame retardancy and are hence in extensive use as various film-forming materials, encapsulating materials, electrical insulating materials, etc. Of these, thermoplastic silicone resins soluble in organic solvents and having a melting point not lower than ordinary temperature are receiving attention from the standpoints of storage ability and handling ability of the resins.

For example, patent document 1 reports that a silicon-containing polymer having a silsesquioxane structure, soluble in solvents, having a melting point of 85 to 90°C, and having high heat resistance is obtained by hydrosilylation polymerization of octakis(silsesquioxane) and a divinylsiloxane.

Patent document 2 discloses a process for producing a copolymer soluble in organic solvents in which a hydrogenated octasilsesquioxane is reacted with a compound having a hydrogen atom at each end. Specifically, it is reported that the copolymer obtained by dehydrative condensation of the hydrogenated octasilsesquioxane with a disilanol is solid at ordinary temperature but is soluble in toluene, methyl isobutyl ketone, and chloroform.

Patent Document 1: JP-A-2000-154252
Patent Document 2: JP-A-2002-69191

### SUMMARY OF THE INVENTION

However, the silicone resins described in patent documents 1 and 2 each are produced using octahydridesilsesquioxane, which is relatively difficult to synthesize, as a starting material. In addition, in the process described in patent document 1, a GPC column is necessary for purifying the resin obtained. There is hence room for improvement in synthesis. Furthermore, since the cost of the monomer used is high, the process is also inferior in productivity.

An object of the invention is to provide a composition for a thermoplastic silicone resin that is capable of providing a thermoplastic silicone resin which has excellent heat resistance, is solid at ordinary temperature, and has a melting point not lower than ordinary temperature and which is easy to synthesize and purify, and to provide a resin composition obtained by reacting the composition.

Namely, the present invention relates to the following items 1 to 7.
1. A composition for a thermoplastic silicone resin, the composition including:
   at least one imide compound selected from the group consisting of compounds represented by formula (I):

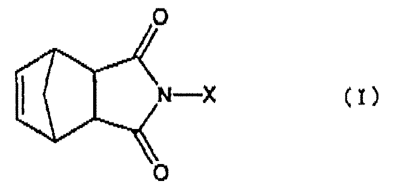

in which X represents a hydrogen atom or a monovalent hydrocarbon group and compounds represented by formula (II):

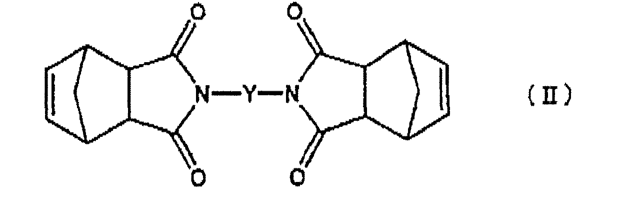

in which Y represents a divalent hydrocarbon group; an organohydrogensiloxane; and a hydrosilylation catalyst. 2. The composition for a thermoplastic silicone resin according to item 1, in which the organohydrogensiloxane includes at least one compound selected from the group consisting of compounds represented by formula (III):

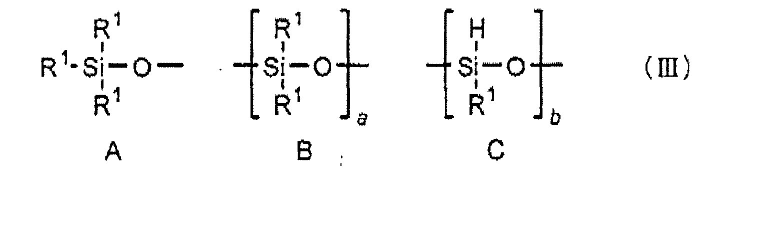

in which A, B, and C are constitutional units, A represents a terminal unit, B and C each represents a repeating unit, R¹ represents a monovalent hydrocarbon group, a represents an integer of 0 or larger, b represents an integer of 1 or larger, and all R¹ groups may be the same or different
and compounds represented by formula (IV):

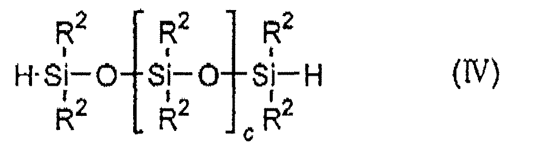

in which R² represents a monovalent hydrocarbon group, c represents an integer of 0 or larger, and all R² groups may be the same or different.
3. The composition for a thermoplastic silicone resin according to item 1 or 2, in which a total content of the compounds represented by formula (I) and formula (II) is 5 to 99% by weight based on the composition.
4. The composition for a thermoplastic silicone resin according to any one of items 1 to 3, in which a weight ratio of the organohydrogensiloxane to the imide compound is set so that a molar ratio of a hydrosilyl group of the organohydrogensiloxane to an alkenediyl group of the imide compound is 0.1/1 to 1/0.1.
5. The composition for a thermoplastic silicone resin according to any one of items 1 to 4, in which a content of the organohydrogensiloxane is 10 to 90% by weight based on the composition.
6. The composition for a thermoplastic silicone resin according to item 2, in which a total content of the compounds represented by formula (III) and formula (IV) in the organohydrogensiloxane is 50% by weight or higher.
7. A thermoplastic silicone resin composition obtained by hydrosilylation reaction of the composition for a thermoplastic silicone resin according to any one of items 1 to 6.

The composition for a thermoplastic silicone resin of the invention produces an excellent effect that a thermoplastic silicone resin which has excellent heat resistance, is solid at ordinary temperature, and has a melting point not lower than ordinary temperature can be provided.

### DETAILED DESCRIPTION OF THE INVENTION

The composition for a thermoplastic silicone resin of the invention includes (1) an organohydrogensiloxane, (2) an imide compound, and (3) a hydrosilylation catalyst, and a major feature thereof is that the imide compound includes a compound having a specific structure.

### (1) Organohydrogensiloxane

The organohydrogensiloxane in the invention is not particularly limited so long as it is a compound having at least one hydrosilyl group in one molecule thereof, and can form a silicone resin having crystallinity imparted thereto by an addition reaction (hydrosilylation reaction) of the hydrosilyl group with the imide compound to be mentioned below. The bonding position of the hydrosilyl group may be any of an end, a main chain, and a side chain. Specifically, it is preferred that, from the standpoint of compatibility with each component, the organohydrogensiloxane includes at least one compound selected from the group consisting of compounds represented by formula (III):

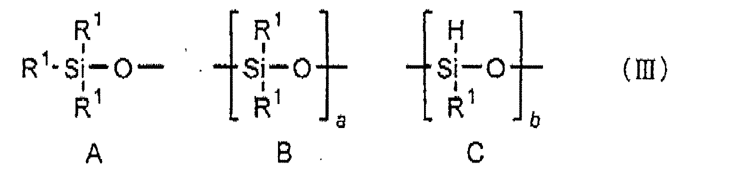

in which A, B, and C are constitutional units, A represents a terminal unit, B and C each represent a repeating unit, R¹ represents a monovalent hydrocarbon group, a represents an integer of 0 or larger, b represents an integer of 1 or larger, and all R¹ groups may be the same or different
and compounds represented by formula (IV):

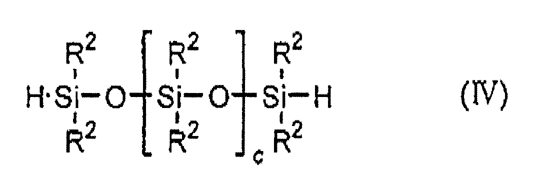

in which R² represents a monovalent hydrocarbon group, c represents an integer of 0 or larger, and all R² groups may be the same or different. Incidentally, in the present specification, the term "organohydrogensiloxane" is a general term for all compounds ranging from low-molecular compounds to high-molecular compounds and including, for example, organohydrogendisiloxanes and organohydrogenpolysiloxanes.

The compounds represented by formula (III) each are constituted by constitutional units A, B and C; A is a terminal unit, B and C each is a repeating unit. These are compounds in which hydrogen atoms are contained in the repeating units.

R¹ in the formula (III), i.e., R¹ in each constitutional unit A, R¹ in each constitutional unit B, and R¹ in each constitutional unit C, each represents a monovalent hydrocarbon group, and examples thereof include saturated or unsaturated hydrocarbon groups which are linear, branched or cyclic. The number of carbon atoms of the hydrocarbon group is preferably 1 to 20, more preferably 1 to 10, from the standpoints of availability and heat resistance, Specific examples thereof include methyl, ethyl, propyl, butyl, pentyl, hexyl, phenyl, cyclohexyl and cyclopentyl. Of these, methyl is preferred from the standpoints of transparency and light resistance. In formula (III), all R¹ groups may be the same or different and each independently represents the hydrocarbon group regardless of constitutional units.

Constitutional unit A is terminal unit, and two such units are contained in formula (III).

The number of constitutional units B, namely, a in formula (III), represents an integer of 0 or larger. However, from the standpoint of reactivity, a is an integer of preferably 1 to 100, more preferably 1 to 50.

The number of constitutional units C, namely, b in formula (III), represents an integer of 1 or larger. However, from the standpoint of reactivity, b is an integer of preferably 1 to 100, more preferably 1 to 50.

The sum of a and b is preferably 1 to 200, more preferably 1 to 100. The ratio of a to b (a/b) is preferably 100/1 to 1/100, more preferably 10/1 to 1/10.

Examples of the compounds represented by formula (III) include methylhydrogensiloxane, dimethylsiloxane-co-methylhydrogensiloxane, ethylhydrogensiloxane and methylhydrogensiloxane-co-methylphenylpolysiloxane. These may be used alone or in combination of two or more thereof. Preferred of these are the compound in which R¹ is methyl, a is an integer of 1 or larger, and b is an integer of 2 or larger.

The compounds represented by formula (III) has a molecular weight of preferably 100 to 100,000, more preferably 100 to 10,000 from the standpoints of stability and handling property. In the present specification, the molecular weight of a silicone derivative means a number average molecular weight and can be determined through a measurement by gel permeation chromatography (GPC) and a calculation for standard polystyrene.

The compounds represented by formula (IV) are compounds having a hydrogen atom at each end.

R² in formula (IV) represents a monovalent hydrocarbon group, and examples thereof include saturated or unsaturated hydrocarbon groups which are linear, branched or cyclic. The number of carbon atoms of the hydrocarbon group is preferably 1 to 20, more preferably 1 to 10, from the standpoint of availability. Specific examples thereof include methyl, ethyl, propyl, butyl, pentyl, hexyl, cyclohexyl and cyclopentyl. Of these, methyl is preferred from the standpoints of transparency and light resistance. In formula (IV), all R² groups may be the same or different. It is, however, preferred that all the groups should be methyl.

Although c in formula (IV) represents an integer of 0 or larger, c is an integer of preferably 0 to 100, more preferably 0 to 10, from the standpoints of reactivity and stability.

Examples of the compounds represented by formula (IV) include tetramethyldisiloxane terminated by hydrosilyl at each end, polydimethylsiloxane terminated by hydrosilyl at each end, polymethylphenylsiloxane terminated by hydrosilyl at each end, and polydiphenylsiloxane terminated by hydrosilyl at each end. These may be used alone or in combination of two or more thereof. Preferred of these are compounds in which all R² groups are methyl and c is an integer of 1 to 100.

The compounds represented by formula (IV) have a molecular weight of preferably 100 to 10,000, more preferably 100 to 1,000, from the standpoints of stability and handling property.

As compounds represented by formula (III) and formula (IV), either commercial products or compounds synthesized by known methods may be used.

The total content of the compounds represented by formula (III) and formula (IV) in the organohydrogensiloxane is preferably 50% by weight or higher, more preferably 80% by weight or higher, and even more preferably substantially 100% by weight.

The content of the organohydrogensiloxane is preferably 10 to 90% by weight, more preferably 20 to 80% by weight, based on the composition.

### (2) Imide Compound

The imide compound in the invention has an alkenediyl group in the molecule thereof from the standpoint of the hydrosilylation reaction with the organohydrogensiloxane. It is sufficient that one or two alkenediyl groups are present in the molecule. Specifically, the imide compound is preferably at least one selected from the group consisting of compounds represented by formula (I):

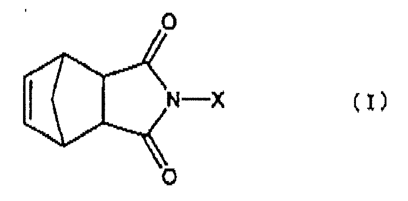

in which X represents a hydrogen atom or a monovalent hydrocarbon group and compounds represented by formula (II):

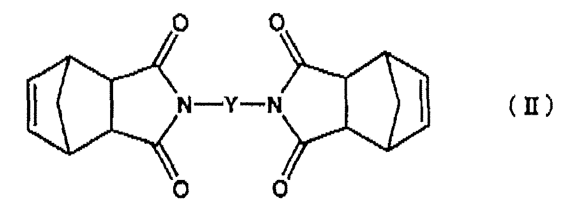

in which Y represents a divalent hydrocarbon group. Therefore, the imide compound in the invention preferably includes a compound selected from the compound group mentioned above and more preferably substantially consists of compound(s) selected from the compound group mentioned above,

X in formula (I) represents a hydrogen atom or a monovalent hydrocarbon group and examples of the monovalent hydrocarbon group include saturated or unsaturated hydrocarbon groups which are linear, branched or cyclic. The number of carbon atoms of the hydrocarbon group is preferably 1 to 20, more preferably 1 to 10, from the standpoints of availability and heat resistance. Specific examples thereof include methyl, ethyl, propyl, butyl, pentyl, hexyl, cyclohexyl, cyclopentyl, and phenyl. Of these, cyclohexyl is preferred from the standpoint of light resistance.

Specific examples of the compound represented by formula (I) include N-cyclohexyl-5-norbomene-2,3-dicarboximide, N-methyl-5-norbornene-2,3-dicarboximide, N-ethyl-5-norbomene-2,3-dicarboximide, and N-phenyl-5-norbomene-2,3-dicarboximide. These may be used alone or in combination of two or more thereof. Of these, N-eyelohexyl-5-norbomene-2,3-dicarboximide is preferred from the standpoints of transparency, heat resistance and availability.

Y in formula (II) represents a divalent hydrocarbon group and examples of the divalent hydrocarbon group include saturated or unsaturated hydrocarbon groups which are linear, branched or cyclic. The number of carbon atoms of the hydrocarbon group is preferably 1 to 20, more preferably 1 to 10, from the standpoints of availability and heat resistance. Specific examples thereof include methylene, ethylene, propylene, butylene, pentylene, hexylene, cyclohexylene, cyclopentylene, phenylene, norbomylene, and hydrocarbon groups shown in the following.

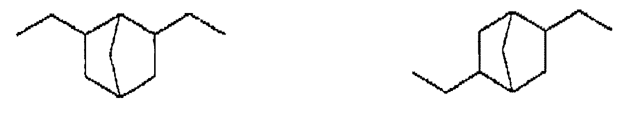

Specific examples of the compound represented by formula (II) include compounds shown in the following. These may be used alone or in combination of two or more thereof.

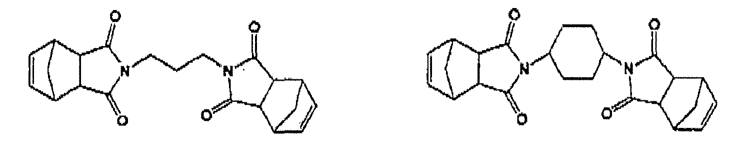

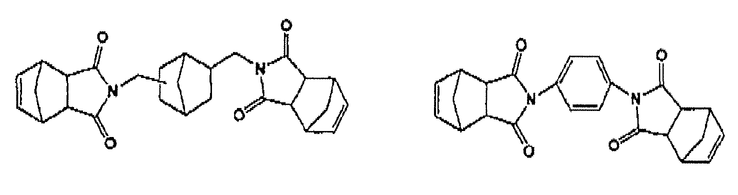

As compounds represented by formula (I) and formula (II), either commercial products or compounds synthesized by known methods may be used.

The total content of the compounds represented by formula (I) and formula (II) is preferably 5 to 99% by weight, more preferably 10 to 95% by weight, and even more preferably 20 to 90% by weight, based on the composition.

Moreover, with regard to the weight ratio of the organohydrogensiloxane to the imide compound, from the standpoint of reacting the hydrosilyl group of the organohydrogensiloxane with the alkenediyl group of the imide compound, the molar ratio of the functional groups (hydrosilyl group/alkenediyl group) is preferably 0.1/1 to 1/0.1, more preferably 0.5/1 to 1/0.2. As the imide compound increases, it becomes possible to suppress high mobility of the silicone skeleton and thus it is easy to maintain a solid state at ordinary temperature. Also, as the imide compound decreases, the ratio of the silicone increases and thus flexibility tends to be heightened.

Furthermore, from the standpoint of reactivity with the hydrosilyl group of the organohydrogensiloxane, it is preferred to use the imide compound represented by formula (I) in combination with the organohydrogensiloxane represented by formula (III) and the imide compound represented by formula (II) in combination with the organohydrogensiloxane represented by formula (III) or formula (IV).

### (3) Hydrosilylation Catalyst

The hydrosilylation catalyst in the invention is not particularly limited so long as the catalyst is a compound which catalyzes the hydrosilylation reaction between the hydrosilyl groups of the organohydrogensiloxane and the alkenediyl group of the imide compound. Examples thereof include platinum catalysts such as platinum black, platinum chloride, chloroplatinic acid, platinum/olefin complexes, platinum/carbonyl complexes and platinum/acetylacetate; and palladium catalysts and rhodium catalysts. Preferred of these, from the standpoints of compatibility and transparency, are platinum/1,3-divinyl-1,1,3,3-tetramethyldisiloxane complexes and platinum/divinylsiloxane complexes.

The content of the hydrosilylation catalyst., in the case of using, for example, a platinum catalyst, is preferably 1.0×10⁻¹⁰ to 1.0×10³ parts by weight, more preferably 1.0×10⁻⁸ to 0.5 parts by weight, in terms of platinum content per 100 parts by weight of the sum of the organohydrogensiloxane and the imide compound, from the standpoint of reaction rate.

The composition for a thermoplastic silicone resin in the invention may contain additives such as an antioxidant, modifier, surfactant, dye, pigment, discoloration inhibitor, ultraviolet absorber, filler, phosphor, and the like besides the ingredients (1) to (3) described above, so long as these additives do not impair the effect of the invention.

The composition for a thermoplastic silicone resin in the invention can be prepared without particular limitations so long as the composition includes (1) the organohydrogensiloxane, (2) the imide compound represented by formula (I) and/or formula. (II), and (3) the hydrosilylation catalyst. The composition may be one prepared through mixing using an additive such as an organic solvent, according to need.

The organic solvent is not particularly limited. However toluene is preferred from the standpoint of enhancing compatibility between the ingredients.

The amount of the organic solvent to be present is preferably 10 to 80% by weight, more preferably 20 to 60% by weight, based on the composition.

The thermoplastic silicone resin composition of the invention is obtained by subjecting the composition for a thermoplastic silicone resin of the invention to hydrosilylation reaction.

Specifically, the thermoplastic silicone resin composition may be obtained by stirring and mixing the organohydrogensiloxane, the imide compound represented by formula (I) and/or formula (II), and the hydrosilylation catalyst optionally together with an organic solvent at a temperature of preferably 0 to 200°C, more preferably 20 to 150°C. Mixing time cannot be unconditionally determined because it varies depending on the reaction temperature and the kinds and amounts of the ingredients to be subjected to the reaction. However, a mixing time of 0.5 to 96 hours is preferred. Methods for mixing are not particularly limited so long as the ingredients are evenly mixed.

The degree of progress of the hydrosilylation reaction can be ascertained through ¹H-NMR analysis on the basis of the intensity of a signal assigned to the SiH group of the organohydrogensiloxane. When the signal has disappeared, the reaction is regarded as completed.

The thermoplastic silicone resin composition thus obtained is solid at ordinary temperature and has a melting point not lower than ordinary temperature. The term "ordinary temperature" in the present specification means 15 to 35°C. The thermoplastic silicone resin composition of the invention has a melting point of preferably 40 to 150°C, more preferably 45 to 100°C. In the present specification, the melting point of a silicone resin composition can be measured by the method described in the Examples which will be given later.

The thermoplastic silicone resin composition of the invention has excellent heat resistance and can hence be used in a wide range of applications such as, for example, materials for forming insulating coating films, weather-resistant coating materials, insulating molding materials, optical semiconductor encapsulating materials, and additives for silicone resins.

### EXAMPLES

The invention will be explained below with reference to Examples and a Comparative Example, but the invention should not be construed as being limited by these Examples and the like in any way.

### [Molecular Weight of Silicone Derivatives]

The molecular weight of a silicone derivative in the invention means number average molecular weight and is determined by gel permeation chromatography (GPC) and a calculation for standard polystyrene.

### [Functional Group Equivalent of Silicone Derivative]

The equivalent was measured with ¹H-NMR using an internal standard substance.

### EXAMPLE 1

To 1.36 g of an organohydrogensiloxane [a compound of formula (III) in which all R¹ groups represent methyl, a=6, and b=6; number average molecular weight: 1,000; a hydrosilyl group equivalent: 7 mmol/g, manufactured by Shin-Etsu Chemical Co., Ltd.) were added 2 g (8.15 mmol) of an imide compound of formula (I) in which X is cyclohexyl) represented by the following formula:

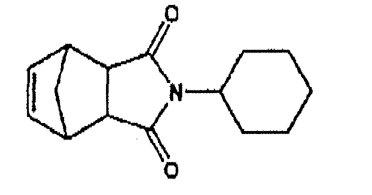

(N-cyclohexyl-5-norbomene-2,3-dicarboximide), 3 g of toluene and 0.5 µL of a platinum/divinylsiloxane complex solution (platinum concentration, 2% by weight) as a hydrosilylation catalyst. The ingredients were stirred and mixed at 80°C for 15 hours. Thereafter, the solvent was removed at reduced pressure to thereby obtain a transparent solid thermoplastic silicone resin composition.

### EXAMPLE 2

A transparent solid thermoplastic silicone resin composition was obtained in the same manner as in Example 1 except that 1.36 g of the organohydrogensiloxane [a compound of formula (III) in which all R¹ groups represent methyl, a=6, and b=6] was changed to 2.50 g of an organohydrogensiloxane [a compound of formula (III) in which all R¹ groups represent methyl, a=15, and b=12, number average molecular weight: 2,000; a hydrosilyl group equivalent: 4 mmol/g, manufactured by Gelest Company] in Example 1.

### EXAMPLE 3

To 0.6 g (4.a mmol) of an organohydrogensiloxane [a compound of formula (IV) in which all R² groups represent methyl and c=0; number average molecular weight: 150; manufactured by Gelest Company) were added 2 g (4.5 mmol) of an imide compound of formula (II) represented by the following formula:

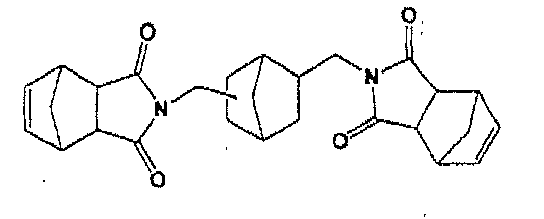

3 g of toluene and 0.5 µL of a platinum/divinylsiloxane complex solution (platinum concentration, 2% by weight) as a hydrosilylation catalyst. The ingredients were stirred and mixed at 80°C for 15 hours. Thereafter, the solvent was removed at reduced pressure to thereby obtain a transparent solid thermoplastic silicone resin composition.

### EXAMPLE 4

A transparent solid thermoplastic silicone resin composition was obtained in the same manner as in Example 3 except that 0.6 g (4.0 mmol) of the organohydrogensiloxane [a compound of formula (IV) in which all R² groups represent methyl and c=0] was changed to 2.0 g (4.4 mmol) of an organohydrogensiloxane [a compound of formula (IV) in which all R² groups represent methyl and c=4, number average molecular weight: 450; manufactured by Gelest Company] in Example 3.

### COMPARATIVE EXAMPLE 1

A silicone resin composition was obtained in the same manner as in Example 1 except that the imide compound was not used in Example 1. The resulting composition was a transparent oil.

### COMPARATIVE EXAMPLE 2

A turbid oily silicone resin composition was obtained in the same manner as in Example 1 except that 2 g (8.15 mmol) of the imide compound having an alkenediyl group represented by formula (I) was changed to 2.3 g (9.5 mmol) of an imide compound having no alkenediyl group represented by the following formula:

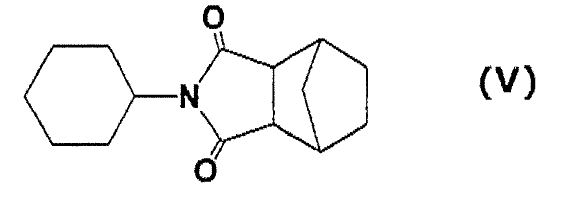

### in Example 1.

### COMPARATIVE EXAMPLE 3

A transparent oily silicone resin composition was obtained in the same manner as in Example 1 except that 2 g (8.15 mmol) of the imide compound having an alkenediyl group represented by formula (I) was changed to 0.89 g (9.5 mmol) of a compound having an alkenediyl group but being not an imide compound, which is represented by the following formula:

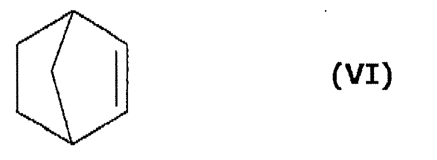

### in Example 1.

### Reference Example 1

A silicone resin composition was obtained in the same manner as in Example 1 except that no hydrosilylation catalyst was used in Example 1. The resulting composition was a turbid oil.

The compositions obtained were evaluated for properties according to the following Test Examples 1 and 2. The results thereof are shown in Table 1.

### Test Example 1 (Thermoplastic Temperature)

Solid samples (1 cm square) were evaluated for thermal behavior at heating. Specifically, each sample was heated to 30 to 200°C on a hot plate and visually examined for temperature (thermoplastic temperature) at which thermoplastic behavior was observed. The thermoplastic behavior means that the sample is softened by heating to become completely gel or liquid. One on which the behavior was not observed was ranked "bad".

### Test Example 2 (Heat Resistance)

A, solid sample similar to the one in Test Example 1 was allowed to stand still in a 200°C hot-air drying oven and the weight was measured after the lapse of 24 hours and 168 hours. A weight loss ratio (%) was calculated, while taking the weight measured before the storage as 100%. The lower the weight loss ratio, the better the heat resistance.

**Table 1**

| | | | Example 1 | Example 2 | Example 3 | Example 4 | Comparative Example 1 | Comparative Example 2 | Comparative Example 3 | Reference Example |
|---|---|---|---|---|---|---|---|---|---|---|
| | (1) Organohydrogen siloxane | Kind | compound of formula (III) in which all R¹s are methyl, a=6 and b=6 | compound of formula (III) in which all R¹s are methyl, a= 15 and b=12 | compound of formula (TV) in which all R²s are methyl, c=0 | compound of formula (IV) in which all R²s are methyl, c=4 | compound of formula (III) in which all R¹s are methyl, a=6 and b=6 | compound of formula (III) in which all R¹s are methyl, a=6 and b=6 | compound of formula (III) in which all R¹s are methyl. a=6 and b=6 | compound of formula (III) in which all R¹s are which alt R¹s are methyl, a=6 and |
| | | Number average molecular weight | 1000 | 2000 | 150 | 450 | 1000 | 1000 | 1000 | 1000 |
| | | Content (% by weight) | 40.4 | 55.5 | 23.1 | 50.0 | 100 | 37.2 | 60.4 | 40.5 |
| | (2) Imide compound | Kind | compound of formula (I) | Compound of formula (I) | compound of folmula (II) | compound of formula (II) | - | compound of formula (V) | - | compound of formula (I) |
| Composition | | Content (% by weight) | 59.5 | 44.4 | 76.9 | 50.0 | - | 62.8 | - | 59.5 |
| | (3) Hydrosilylation catalyst | Kind | platinum/ divinyl siloxane complex | platinum/ divinyl siloxane complex | platinum/ divinyl siloxane | platinum/ divinyl siloxane complex | platinum/ divinyl siloxane complex | platinum/ divinyl siloxane complex | platinum divinyl siloxane complex | - |
| | | Content (% by weight)" | 0.0003 | .0002 | 0.0004 | 0.0003 | 0.0007 | 0.0003 | 0.0004 | - |
| | Other ingredient | Kind | - | - | - | - | - | - | compound of formula(VI) | - |
| | | Content (% by weight) | - | - | - | - | - | - | 39.5 | - |
| | Hydrosilyl group/alkenediyl group" | | 1.17 | 123 | 0.89 | 0.98 | | | 1.12 | 1.17 |
| | Appearance | | transparent solid | transparent solid | transparent solid | transparent solid | transparent oil | white-turbid oil | transparent oil | white-turbid oil |
| | Thermoplastic temperature (°C) | | 40 | 40 | 60 | 50 | - | - | - | - |
| Property | Heat resistance (weight loss ratio after 24 hours. %) | | 1.0 | 1.4 | 1.5 | 13 | - | - | - | - |
| | Heat resistance (weight loss ratio after 168 hours, %) | | 8.5 | 9.4 | 33 | 3.0 | - | - | - | - |

| | | | | | | | | | | |
|---|---|---|---|---|---|---|---|---|---|---|
| 1) Content (parts by weight) of platinum of hydrosilylation catalyst per 100 parts by weight of the sum of organohydrogensiloxane and imide compound (or other compound having alkenediyl group). 2) Molar ratio of hydrosilyl group of (1) organohydrogensiloxane and alkenediyl group of (2) imide compound or other compound (hydrosilyl group/alkenediyl group). | | | | | | | | | | |

It has been seen from Table 1 that the compositions of Examples are solid at 25°C but have a melting point higher than ordinary temperature and that these compositions further have excellent heat resistance. On the other hand, in the case of the composition of Comparative Example 1, resinification with the organohydrogensiloxane compound alone took place and, in the case of the composition of Comparative Example 2, since an imide compound having no alkenediyl group was used, resinification with the imide compound did not take place. Thus, no solid resins were obtained in both cases. Also, in the case of the composition of Comparative Example 3, the reaction with the alkenediyl group took place but, since an imide compound which has a bulky structure was not used, mobility of the silicone resin could not be reduced. Therefore, no solid resin was obtained.

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2010-168311 filed on July 27,2010, and the contents are incorporated herein by reference.
All references cited herein are incorporated by reference herein in their entirety.
Also, all the references cited herein are incorporated as a whole,

The composition for a thermoplastic silicone resin of the invention is suitable for use in, for example, materials for forming insulating coating films, weather-resistant coating materials, insulating molding materials, semiconductor encapsulating materials, and additives for silicone resins.

## Claims

1. A composition for a thermoplastic silicone resin, said composition comprising:
at least one imide compound selected from the group consisting of compounds represented by formula (I): 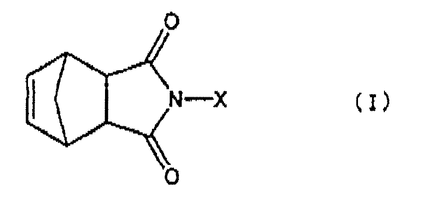 in which X represents a hydrogen atom or a monovalent hydrocarbon group and compounds represented by formula (II): 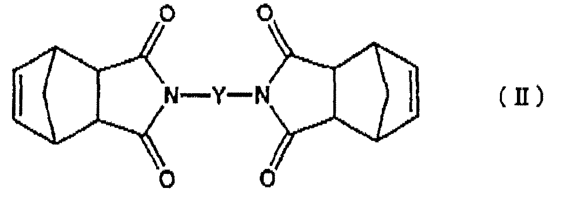 in which Y represents a divalent hydrocarbon group;
an organohydrogensiloxane; and
a hydrosilylation catalyst,

2. The composition for a thermoplastic silicone resin according to claim 1, wherein the organohydrogensiloxane comprises at least one compound selected from the group consisting of compounds represented by formula (III): 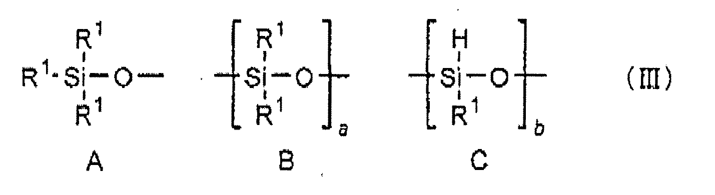 in which A, B, and C are constitutional units, A represents a terminal unit, B and C each represents a repeating unit, R¹ represents a monovalent hydrocarbon group, a represents an integer of 0 or larger, b represents an integer of 1 or larger, and all R¹ groups may be the same or different
and compounds represented by formula (IV): 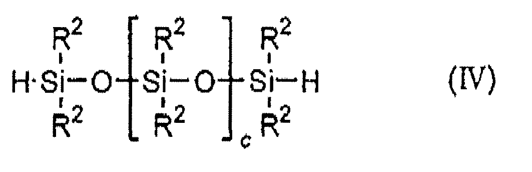 in which R² represents a monovalent hydrocarbon group, c represents an integer of 0 or larger, and all R² groups may be the same or different.

3. The composition for a thermoplastic silicone resin according to claim 1 or 2, wherein a total content of the compounds represented by formula (I) and formula (II) is 5 to 99% by weight based on the composition.

4. The composition for a thermoplastic silicone resin according to any one of claims 1 to 3, wherein a weight ratio of the organohydrogensiloxane to the imide compound is set so that a molar ratio of a hydrosilyl group of the organohydrogensiloxane to an alkenediyl group of the imide compound is 0.1/1 to 1/0.1.

5. The composition for a thermoplastic silicone resin according to any one of claims 1 to 4, wherein a content of the organohydrogensiloxane is 10 to 90% by weight based on the composition.

6. The composition for a thermoplastic silicone resin according to claim 2, wherein a total content of the compounds represented by formula (III) and formula (IV) in the organohydrogensiloxane is 50% by weight or higher.

7. A thermoplastic silicone resin composition obtained by hydrosilylation reaction of the composition for a thermoplastic silicone resin according to any one of claims 1 to 6.
